**Europäisches Patentamt**

**European Patent Office**

**Office européen des brevets**

(19)

(11) Veröffentlichungsnummer: **0 126 843**
**B1**

(12) # EUROPÄISCHE PATENTSCHRIFT

(45) Veröffentlichungstag der Patentschrift:
**15.11.89**

(51) Int. Cl.⁴: **G 01 D 5/244**

(21) Anmeldenummer: **84101254.5**

(22) Anmeldetag: **08.02.84**

(54) Vorrichtung zum Reproduzieren einer Bezugsposition.

(30) Priorität: **26.03.83 DE 3311203**
**11.11.83 DE 3340866**

(43) Veröffentlichungstag der Anmeldung:
**05.12.84 Patentblatt 84/49**

(45) Bekanntmachung des Hinweises auf die Patenterteilung:
**15.11.89 Patentblatt 89/46**

(84) Benannte Vertragsstaaten:
**AT CH DE FR GB IT LI NL SE**

(56) Entgegenhaltungen:
**DE-A-1 673 887**
**DE-A-1 964 381**
**DE-A-2 023 677**
**FR-A-2 406 804**
**GB-A-1 284 641**
**GB-A-2 067 282**
**US-A-4 318 225**

(73) Patentinhaber: **Dr. Johannes Heidenhain GmbH,**
**Nansenstrasse 17, D-8225 Traunreut (DE)**

(72) Erfinder: **Burkhardt, Horst, Dr., Fraueneichweg 12,**
**D-8221 Truchtlaching (DE)**
Erfinder: **Ernst, Alfons, Dipl.- Ing., Traunring 62,**
**D-8225 Traunreut (DE)**
Erfinder: **Dangschat, Holmer, Dipl.- Ing., Heinz-**
**von- Stein- Strasse 25, D-8225 Traunreut (DE)**

EP 0 126 843 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung bezieht sich auf eine Vorrichtung nach dem Oberbegriff des Anspruches 1.

Es sind Verfahren zur Ermittlung von Bezugspositionen bekannt, bei denen relativ zueinander bewegliche Maschinen- oder Meßsystem-Bausteine aus einer Ausgangsposition bis zu einer Referenzmarke verfahren werden, um den bis dort zurückgelegten Wert zu ermitteln und zu speichern oder die Referenzmarke zur Bezugsposition mit dem Wert "Null" zu erklären. Ein solches Verfahren ist mit einem inkrementalen Längen- oder Winkelmeßsystem möglich, wie es in der DE-PS-1 964 381 beschrieben wird. Dieses Verfahren erfordert aber eine ungehinderte Relativbeweglichkeit der zu messenden Objekte, da Bauteile der Meßeinrichtung fest mit den zu messenden Objekten verbunden sind und gemeinsam mit diesen bis zu einer Referenzmarke verstellt werden müssen.

Aus der DE-OS-1 673 887 ist ein Meßsystem bei einer Maschine bekannt, das bei auf dem Maschinenbett festgeklemmtem Maschinenschlitten die Ermittlung einer Bezugsposition ermöglicht. Als erstes muß dort der Schlitten in diejenige Position gefahren werden, die später als Bezugsposition zu Null erklärt werden soll. Danach wird der Schlitten auf dem Maschinenbett festgeklemmt. Anschließend wird die Abtastplatte relativ zum Maßstab verfahren, bis eine Referenzmarke auftritt. Bei Erreichen der Referenzmarke wird der elektronische Zähler der Meßeinrichtung auf Null gesetzt. Sodann kann die Klemmung für die Maschinenteile wieder gelöst und der Schlitten in die gewünschte Position eingefahren werden. Die Lage der Referenzmarke stellt also die Bezugsposition für die weiteren Arbeitsgänge dar.

Die bekannten Verfahren zur Ermittlung einer als Ausgangslage definierten Bezugsposition - die vor den eigentlichen Arbeitsgängen erfolgt - sind mit den beschriebenen inkrementalen Meßeinrichtungen jedoch dann nicht mehr möglich, wenn bereits Arbeitsgänge erfolgt sind, und beispielsweise laufende Arbeitsgänge unterbrochen werden. Die Unterbrechung eines laufenden Arbeitsganges, beispielsweise bei einem Handhabungsautomaten - im allgemeinen als Industrieroboter bezeichnet - ist durch Stromausfall möglich. Der Roboter bleibt dann in seiner momentanen Position stehen; der auf seine ursprüngliche Bezugsposition bezogene, nach dem Stand der Technik ermittelte Meßwert geht aber durch den Stromausfall verloren, da auch die Messung unterbrochen wurde.

Zur Fortführung des unterbrochenen Arbeitsganges müßte jedoch die Bezugsposition bekannt sein. Eine Rückbewegung des Roboters aus seiner Momentanposition in die ursprüngliche Ausgangslage scheidet aber in der Regel aus, weil beispielsweise gerade ein Werkzeug im Eingriff ist.

Der Erfindung liegt daher die Aufgabe zugrunde, eine Vorrichtung zum Reproduzieren einer Bezugsposition anzugeben, die die Nachteile der bekannten Verfahren und Vorrichtungen beseitigt und es ermöglicht, nach unterbrochenen Messungen und Bewegungen aus unbekannten Momentanpositionen ohne Bewegung der zu messenden Objekte eine Bezugsposition zu ermitteln.

Diese Aufgabe wird erfindungsgemäß durch die kennzeichnenden Merkmale des Anspruchs 1 gelöst.

Weitere vorteilhafte Ausgestaltungen entnimmt man den abhängigen Ansprüchen.

Die mit der Erfindung erzielten Vorteile bestehen insbesondere darin, daß die vorgeschlagene Vorrichtung auf einfache und schnelle Weise die Reproduktion einer Bezugsposition nach unterbrochenen Messungen und Bewegungen aus unbekannten Momentanpositionen erlaubt, ohne daß die zu messenden Objekte bewegt werden müssen. Ein solches zu messendes Objekt in Form eines Werkzeugs kann somit bei einer Unterbrechung des Meßvorgangs durch eine Störung im Eingriff am Werkstück verbleiben, so daß nach Behebung der Störung und Ermittlung der Bezugsposition der unterbrochene Bearbeitungsvorgang unverzüglich wieder fortgesetzt werden kann. Ein Zurückziehen des Werkzeugs von der Eingriffsstelle am Werkstück und ein erneutes genaues Wiederanfahren dieser Eingriffsstelle ist zeitaufwendig und schwierig und kann zu Beschädigungen des Werkstücks führen. Ferner ermöglicht diese Vorrichtung beispielsweise bei Robotern programmgesteuerte Überprüfungen der jeweiligen Bezugspositionen zwischen einzelnen Arbeitsabläufen, wodurch die Betriebssicherheit derartiger Systeme erheblich erhöht wird.

Mit Hilfe von Zeichnungen soll anhand von Ausführungsbeispielen die Erfindung näher erläutert werden.

Es zeigen

Figur 1     ein Winkelmeßgerät, Schnittdarstellung,

Figur 2     eine Draufsicht auf ein Gerät gemäß Figur 1, Schnittdarstellung,

Figur 3     eine Variante eines Winkelmeßgerätes, Schnittdarstellung,

Figur 4     einen Schnitt entlang der Linie A - B gemäß Figur 3,

Figur 5     einen Schnitt entlang der Linie C - D gemäß Figur 3 als Sicht auf einen Teilscheibenausschnitt,

Figur 6     eine Winkelmeßeinrichtung im Längsschnitt und

Figur 7     eine Mitnehmerkupplung im Längsschnitt und in zwei Ansichten.

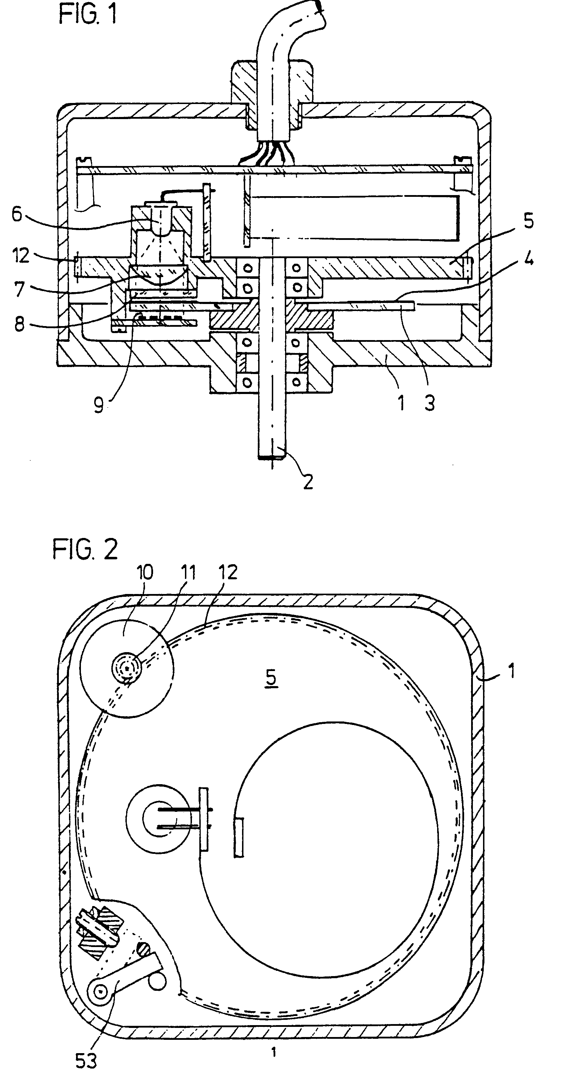

Die in Figur 1 dargestellte Winkelmeßeinrichtung weist ein Gehäuse 1 auf, das im Gehäuse eines nicht dargestellten Industrieroboters befestigt ist. Eine im Gehäuse 1 drehbar gelagerte Welle 2 ragt in das Gehäuse 1 hinein und trägt dort eine Scheibe 3 mit einer Inkrementalteilung 4 in Form eines Gitters. Die Inkrementalteilung 4 wird lichtelektrisch abgetastet. Zu diesem Zweck ist eine zweite Scheibe 5 vorgesehen, die ebenfalls drehbar auf der Welle 2 gelagert ist. Im normalen Betriebszustand steht die zweite Scheibe 5 still, so daß die in ihr befestigte Beleuchtungseinrichtung 6 mit Kondensor 7, Abtastplatte 8 und Fotoelementen 9 ebenfalls ortsfest ist und bei Drehung der Teilscheibe 3 deren Bewegung durch Modulation des durch die Gitterteilung 4 und die Abtastplatte 8 hindurchtretenden Lichtstromes in bekannter Weise von den Fotoelementen 9 erfaßt und in einem elektronischen Zähler Z als Meßwert gezählt wird.

Da also die zweite Scheibe 5 im allgemeinen zusammen mit dem Gehäuse 1 still steht, können auf diese Weise Drehbewegungen der Welle 2 - die die Teilscheibe 3 trägt - exakt ermittelt werden.

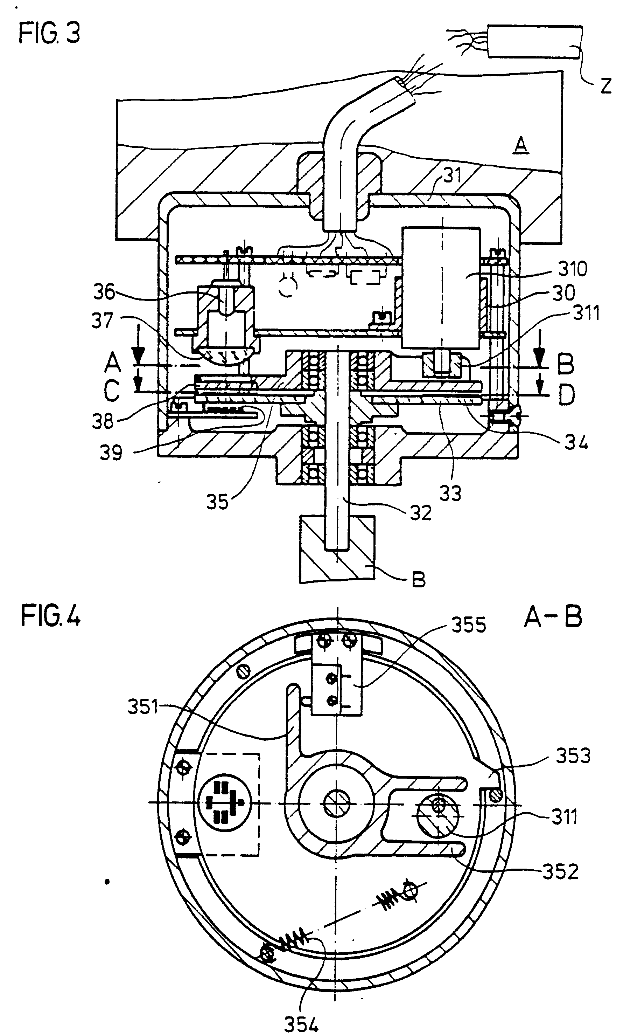

In einem Industrieroboter ist das Gehäuse 1 fest im Gehäuse A des Industrieroboters befestigt, und die Welle 2 ist fest mit einem Handhabungsbaustein, beispielsweise einem Greifer B verbunden (s. Fig. 3).

Die Drehungen, die der Greifer B ausführt, werden von der Meßeinrichtung erfaßt und zu Meß- oder Steuerzwecken an eine Auswerteeinrichtung Z weitergeleitet.

Um bei derartigen inkrementalen Meßvorrichtungen eine Bezugsbasis zu gewinnen, sind entlang der Teilungsspur Referenzmarken vorgesehen (wie beispielsweise in der eingangs erwähnten DE-OS-1 673 887 oder auch der DE-PS-2 952 106 beschrieben). Vor Beginn eines Bearbeitungszyklus, also vor Beginn einer neuen Messung wird der Greifer B solange verdreht, bis eine der Referenzmarken erreicht ist. Diese Position wird zu "Null" erklärt, oder es wird dort ein anderer, vorher festgelegter oder durch ein Programm bestimmter Zahlenwert in den Zähler Z gesetzt. Während der nachfolgenden Arbeitsbewegungen des Roboters ist dieser eingangs gewählte Wert die Bezugsbasis. Das Einstellen auf die Bezugsbasis kann in der Weise geschehen, wie es in der DE-OS-1 673 887 auf Seite 14 oben beschrieben ist.

Wenn nun während eines Bearbeitungszyklus eine Störung, etwa infolge einer Stromunterbrechung, auftritt, so muß der Arbeitsgang unterbrochen werden, was natürlich auch die Messung unterbricht.

Bei Stromunterbrechung ist der beim Auftreten der Störung anstehende Meßwert verlorengegangen, also auch der Bezug auf die Ausgangsposition. Da jedoch im Störungsfall das Werkzeug des Greifers B in dar Regel gerade im Eingriff ist, kann nicht, wie zu Beginn des Arbeitszyklus, der Greifer B solange verdreht werden, bis von der Abtasteinrichtung die ursprüngliche Referenzmarke erfaßt wird.

Mit der erfindungsgemäßen Vorrichtung kann jedoch auch in diesem Falle die Bezugslage wieder hergestellt werden. Hierzu ist die Meßeinrichtung mit einem Antriebsmotor 10 ausgerüstet. Der Antriebsmotor 10 weist ein Ritzel 11 auf, das in einer Außenverzahnung 12 der Scheibe 5 kämmt (Fig. 2). Im Falle einer Störung wird der Antriebsmotor 10 angesteuert und verdreht über das Getriebe 11/12 die Scheibe 5 soweit, bis die Abtasteinrichtung bestehend aus Beleuchtungseinrichtung 6, Kondensor 7, Abtastplatte 8 und Fotoelementen 9 eine Referenzmarke überfährt. Durch die Referenzmarken wird der Zähler wieder auf "Null" oder auf den anderen gewählten Wert gesetzt, der Antriebsmotor 10 wird abgeschaltet und die Scheibe 5 kehrt in die Position beim Störfall zurück. Dabei werden die Inkremente der Gitterteilung 4 gezählt, und die Entfernung der Momentanposition von der Bezugsposition ist wieder bekannt.

Während dieses Vorganges steht der Roboter still. Gehäuse 1, Welle 2 und Teilscheibe 3 bewegen sich nicht.

Im Anschluß an dieses Reproduzieren einer Bezugsposition kann der Arbeitszyklus fortgesetzt werden.

In besonders vorteilhafter Weise läßt sich die Erfindung mit einer Vorrichtung gemäß Figur 3 - Figur 5 durchführen.

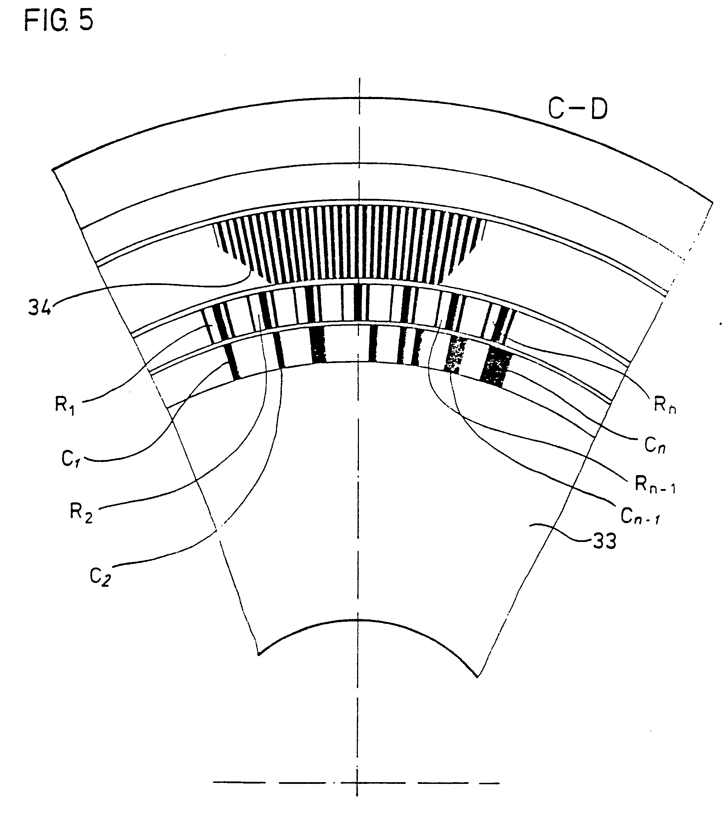

In einem Gehäuse 31 ist unter anderem eine Welle 32 gelagert, die eine Scheibe 33 mit einer inkrementalen Gitterteilung 34 trägt (siehe auch Fig. 5). Im Gehäuseinnern trägt die Welle 32 eine weitere Scheibe 35, an der eine Abtastplatte 38 angebracht ist. Die Scheibe 35 ist auf der Welle 32 drehbar gelagert und trägt an ihrer der Teilscheibe 33 abgewandten Oberseite einen Aufbau, der mit einem Schaltarm 351 und einer Gabel 352 versehen ist. Zwischen den Armen der Gabel 352 greift ein Exzenter 311 an, der auf der Achse eines Antriebsmotors 310 sitzt. Der Antriebsmotor 310 ist ortsfest im Gehäuse 31 in einer Halterung 30 befestigt. Die Beleuchtungseinrichtung 36, der Kondensor 37 und die Fotoelemente 39 zur Abtastung der Gitterteilung 34 und der Referenzmarken $R_1$ bis $R_n$ sind ebenfalls ortsfest im Gehäuse 31 angeordnet. Im Ruhezustand ist die Scheibe 35 durch einen Anschlag 353 in ihrer Lage justiert. Diese Lage hat die Scheibe 35 im normalen Betriebszustand inne. Die normale Funktion läuft wie zu den Figuren 1 und 2 beschrieben ab.

Im Störfall kann das Reproduzieren einer Bezugsposition hier jedoch sehr schnell ablaufen.

Durch die Beleuchtungseinrichtung 36 und den Kondensor 37 wird ein Feld mit bestimmter Größe ausgeleuchtet. Auf die Größe dieses Leuchtfeldes sind die Anordnung der Referenzmarken $R_1$ bis $R_n$ und die Fotoelemente 39 abgestimmt. Wie aus Figur 5 ersichtlich ist, ist entlang der Gitterteilung 34 eine Reihe von Referenzmarken $R_1$ bis $R_n$ vorgesehen, die auf einer konzentrischen Spur angeordnet sind. Die einzelnen Referenzmarken $R_1$ bis $R_n$ sind mit Codemarken $C_1$ bis $C_n$ versehen und damit sozusagen numeriert. Die Codemarke $Ci$ kennzeichnet den Abstand der zugehörigen Referenzmarke $Ri$ von einem bestimmten Nullpunkt der Gitterteilung 34. Die Verteilung der Referenzmarken $R_1$ bis $R_n$ ist so bemessen, daß die Referenzmarke $R_1$ genau 100 Gitterteilstriche vom Nullpunkt der Teilung entfernt ist, die Referenzmarke $R_2$ genau 200 Gitterteilstriche usw.. Bei einer Gitterkonstanten von 40 um bedeutet das, daß alle 4 mm eine Referenzmarke Ri angeordnet ist.

Die Größe des ausgeleuchteten Feldes ist so ausgelegt, daß bei jeder Stellung der Teilscheibe 33 eine der Referenzmarken $R_1$ bis $R_n$ und die zugehörigen Codemarken $C_1$ bis $C_n$ innerhalb dieses ausgeleuchteten Feldes liegt.

Im Störfalle muß also die zweite der drehbaren Scheiben 35 mit der Abtastplatte 38 lediglich um einen Weg von maximal 4 mm verschwenkt werden, um mit Sicherheit eine der Referenzmarken $R_1$ bis $R_n$ und die jeweils bei den Referenzmarken befindliche Codemarke abzutasten. An der Referenzmarke Ri wird dann der Zähler Z auf den Zahlenwert gesetzt, der durch die Codemarke Ci der abgetasteten Referenzmarke Ri festgelegt ist. Von diesem Wert aus werden bei der Rückschwenkbewegung der Scheibe 35 die Gitterstriche der Teilung 34 gezählt bis die Scheibe 35 ihre Ausgangslage - fixiert durch den Anschlag 353 - wieder erreicht hat. Die Momentanposition in Bezug auf die Bezugsposition ist nun wieder ermittelt und wird dargestellt als der Meßwert, der sich ergibt aus der Referenzmarkenposition (bestimmt - durch die Codemarke) und dem dieser überlagerten Zählwert der Gitterstriche der Teilung 34, der bei der Rückbewegung der Abtastplatte 38 mit der Scheibe 35 ermittelt wurde.

Die erschütterungsempfindliche Beleuchtungseinrichtung 36 braucht bei diesem Vorgang nicht bewegt zu werden und wird daher eine längere Lebensdauer haben. Justierprobleme treten wegen der unveränderbaren Position der Beleuchtungseinrichtung 36 nicht auf.

Die Schwenkbewegung der Scheibe 35 wird durch einen Antriebsmotor 310 vollzogen, auf dessen Achse ein Exzenter 311 sitzt. Der Exzenter 311 liegt zwischen den Armen einer Gabel 352, die auf der Oberseite der Scheibe 35 einen Aufbau bildet. Bei einer Motorumdrehung wird durch das Zusammenwirken des Exzenters 311 mit der Gabel 352 die Scheibe 35 um einen Weg von 4 mm geschwenkt und kehrt in ihre Ausgangslage am Anschlag 353 zurück. Eine Feder 354 unterstützt die Rückschwenkung und sichert die exakte Anlage am Anschlag 353. Im Moment der Rückkehr in die Ausgangslage wird durch einen Schaltarm 351 am oberseitigen Aufbau der Scheibe 35 ein Schalter 355 betätigt, der den Antriebsmotor 310 stillsetzt.

Der Antriebsmotor 310 weist eine kleine Zeitkonstante auf, so daß eine Umdrehung des Exzenters 311, also auch eine vollständige Schwenkbewegung der Scheibe 35, innerhalb einer zehntel Sekunde vollzogen ist.

Die vorbeschriebene Meßeinrichtung arbeitet derart schnell, daß nicht nur in Störungsfällen die Bezugsposition wieder sicher reproduziert werden kann, sondern bei einem solchen "Eichschritt" von nur einer zehntel Sekunde Dauer lassen sich bei Robotern ohne weiteres zwischen den einzelnen Arbeitsabläufen noch derartige "Eichschritte" vom Programm aus gesteuert vorsehen, was die Betriebssicherheit derartiger Systeme erheblich erhöht.

Es liegt im Rahmen der Erfindung, auch andere Meßeinrichtungen, beispielsweise Längenmeßeinrichtungen derart zu gestalten.

Ebenso bleibt es ins Belieben des Fachmannes gestellt, anstelle der Antriebsmotoren zur Verstellung der Abtasteinrichtung andere Antriebe zu wählen.

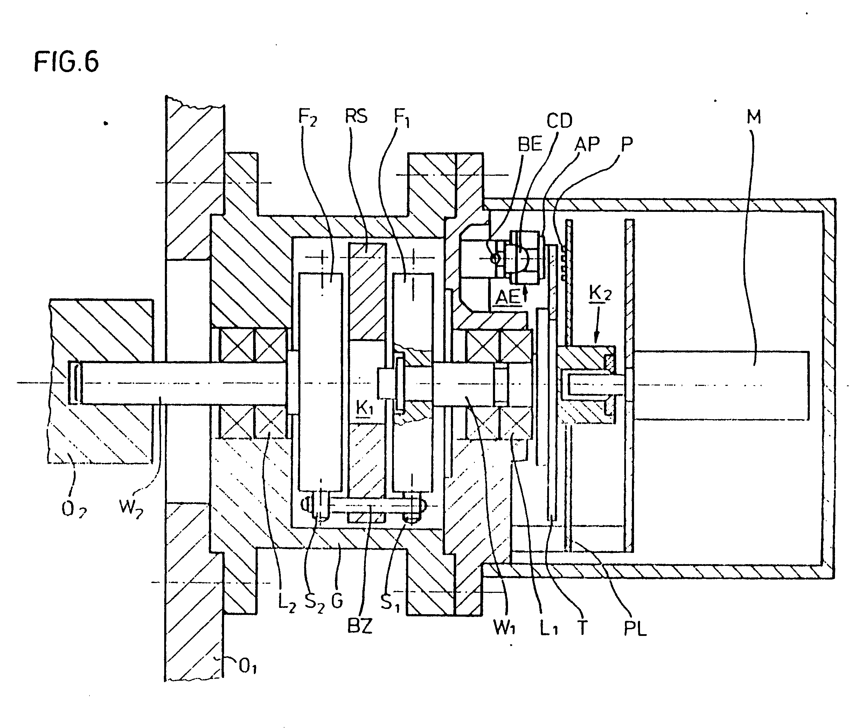

Die in Figur 6 im Längsschnitt dargestellte Winkelmeßeinrichtung weist ein Gehäuse G auf, das an einem zumessenden Objekt $O_1$ beispielsweise an einem Gehäuse eines nicht gezeigten Industrieroboters befestigt ist. Im Inneren des Gehäuses G ist eine erste Welle $W_1$ mittels Lager $L_1$ drehbar gelagert und trägt eine Teilscheibe T mit einer Inkrementalteilung und mit der Inkrementalteilung absolut zugeordneten Referenzmarken. Die Inkrementalteilung und die Referenzmarken der Teilscheibe T werden von einer im Gehäuse G befestigten Abtasteinheit AE lichtelektrisch abgetastet, die eine Beleuchtungseinheit BE mit einem Kondensor CD, eine Abtastplatte AP und Photoelemente P auf einer im Gehäuse G befestigten Platine PL aufweist. Die Drehung der Teilscheibe T wird durch die Modulation des durch die Teilungen der Teilscheibe T und der Abtastplatte AP hindurchtretenden Lichtstromes in bekannter Weise von den Photoelementen P erfaßt, deren periodische Abtastsignale einem Zähler zur Ermittlung eines Meßwertes für die Relativlage der Teilscheibe T bezüglich der Abtasteinheit AE zugeleitet werden.

Die erste Welle $W_1$ mit der Teilscheibe T ist über eine Mitnehmerkupplung $K_1$ mit einer zweiten Welle $W_2$ verbunden, die ebenfalls im Inneren des Gehäuses G mittels Lager $L_2$ gelagert ist und aus dem Gehäuse G zur Befestigung am anderen zu messenden drehbaren Objekt $O_2$, beispielsweise an einem Greifer des Industrieroboters, herausragt.

Die Mitnehmerkupplung $K_1$ besteht aus einer Anschlußnabe $F_1$, die auf der Welle $W_1$ befestigt ist, und aus einer Anschlußnabe $F_2$, die auf der Welle $W_2$ befestigt ist, sowie aus einer Ringscheibe RS. An der Peripherie der beiden Anschlußnaben $F_1$, $F_2$ ragen jeweils drei um 120° zueinander versetzte Anschläge $S_1$, $S_2$ in radialer Richtung heraus. Zwischen den beiden Anschlußnaben $F_1$, $F_2$ ist die Ringscheibe RS angeordnet, die an ihrer Peripherie drei um 120° zueinander versetzte Bolzen BZ aufweist, die in axialer Richtung aus Bohrungen beidseitig der Ringscheibe RS herausragen und mit den Anschlägen $S_1$, $S_2$ der Anschlußnaben $F_1$, $F_2$ bei einer Drehung der Wellen $W_1$, $W_2$ in Kontakt stehen. Die Ringscheibe RS besitzt keine eigene Lagerung und ist aufgrund der symmetrischen Anordnung der Bolzen BZ bei der Drehung der Wellen $W_1$, $W_2$ selbstzentrierend und übt auf die Lager $L_1$, $L_2$ der Wellen $W_1$, $W_2$ keine Querkraft aus.

Die Mitnehmerkupplung $K_1$ nimmt bei einer

vorgegebenen Drehrichtung des drehbaren Objekts $O_2$ und damit der Welle $W_2$ über die miteinander in Kontakt stehenden Bolzen BZ der Ringscheibe RS und Anschläge $S_1$, $S_2$ der Anschlußnaben $F_1$, $F_2$ die Welle $W_1$ mit der Teilscheibe T mit. Bei einer Umkehrung der vorgegebenen Drehrichtung der Welle $W_2$ wird die Welle $W_1$ nicht mehr mitgenommen, da die Bolzen BZ der Ringscheibe RS und die Anschläge $S_2$ der Anschlußnabe $F_2$ außer Kontakt geraten. Um auch bei dieser umgekehrten Drehrichtung der Welle $W_2$ einen Kontakt zwischen den Bolzen BZ der Ringscheibe RS und den Anschlägen $S_2$ der Anschlußnabe $F_2$ zu gewährleisten, ist das der Mitnehmerkupplung $K_1$ abgewandte Wellenende der Welle $W_1$ über eine Rutschkupplung $K_2$ mit einem im Gehäuse G befestigten Antriebsmotor M gekoppelt, der die Welle $W_1$ entgegen der vorgegebenen Drehrichtung der Welle $W_2$ antreibt. In beiden Drehrichtungen des zu messenden Objekts $O_2$ sind somit die beiden Wellen $W_1$, $W_2$ miteinander fest verbunden, so daß die Relativlage der beiden zu messenden Objekte $O_1$, $O_2$ durch die Winkelmeßeinrichtung exakt ermittelt werden kann.

Um zur Messung der Relativlage der beiden Objekte $O_1$, $O_2$ eine bestimmte Bezugsposition zu gewinnen, wird vor Beginn einer neuen Messung das zu messende Objekt $O_2$ bei wirkendem Antriebsmotor M solange verdreht, bis eine Referenzmarke abgetastet wird. Bei dieser Bezugsposition wird der Zähler auf den Wert "Null" oder auf einen anderen, vorher festgelegten oder durch ein Programm bestimmten Zahlenwert gesetzt.

Wenn nun während eines Bearbeitungsvorganges und damit einer Messung eine Störung, etwa infolge einer Stromunterbrechung, auftritt, so wird der Arbeitsgang und damit auch die Messung des drehbaren Objekts $O_2$ unterbrochen. Bei Stromunterbrechung sind der beim Auftreten der Störung vorhandene Meßwert und damit auch die Bezugsposition verlorengegangen. Da jedoch beim Auftreten des Störungsfalls das zu messende Objekt $O_2$ in Form des Greifers des Industrieroboters in der Regel gerade im Eingriff ist, kann das Objekt $O_2$ nicht, wie vor Beginn des Arbeitsgangs und der Messung, solange verdreht werden, bis die Abtasteinheit AE die ursprüngliche Referenzmarke abtastet.

Zum Reproduzieren der Bezugsposition wird erfindungsgemäß bei stillstehender Welle $W_2$ der Antriebsmotor M umgepolt; der Antriebsmotor M dreht die Welle $W_1$ mit der Teilscheibe T über die Rutschkupplung $K_2$ in der umgekehrten Drehrichtung, bis die Abtasteinheit AE wieder die ursprüngliche Referenzmarke abtastet, so daß der Zähler wieder auf den ursprünglichen Wert gesetzt wird. Anschließend wird der Antriebsmotor M erneut in die ursprüngliche Drehrichtung umgepolt und die Welle $W_1$ mit der Teilscheibe T wieder bis zum Kontakt der Anschläge $S_1$ der Anschlußnabe $F_1$ mit den Bolzen BZ der Ringscheibe RS zurückgedreht, so daß die Welle $W_1$ und die Teilscheibe T wieder die Momentanposition beim Auftreten der Störung innehaben. Bei dieser Rückkehr der Welle $W_1$ und der Teilscheibe T von der ursprünglichen Referenzmarke zur Momentanposition beim Auftreten der Störung werden die Inkremente der Teilung der Teilscheibe T im Zähler gezählt, so daß der verlorengegangene Meßwert wiedergewonnen ist und der unterbrochene Arbeitsvorgang und Meßvorgang fortgesetzt werden können.

Da die Mitnehmerkupplung $K_1$ jeweils um 120° zueinander versetzte Bolzen BZ und Anschläge $S_1$, $S_2$ aufweist, und somit eine Relativbewegung der Welle $W_1$ bezüglich der Welle $W_2$ beim Reproduzieren der Bezugsposition nur innerhalb eines Winkels < 240° möglich ist, sind auf der Teilscheibe T zum Reproduzieren einer verlorengegangenen Bezugsposition mindestens zwei Referenzmarken erforderlich, die zur gegenseitigen Unterscheidung einer Codierung in Form von Codemarken bedürfen, wie sie beispielsweise in der DE-PS-2 952 106 beschrieben sind.

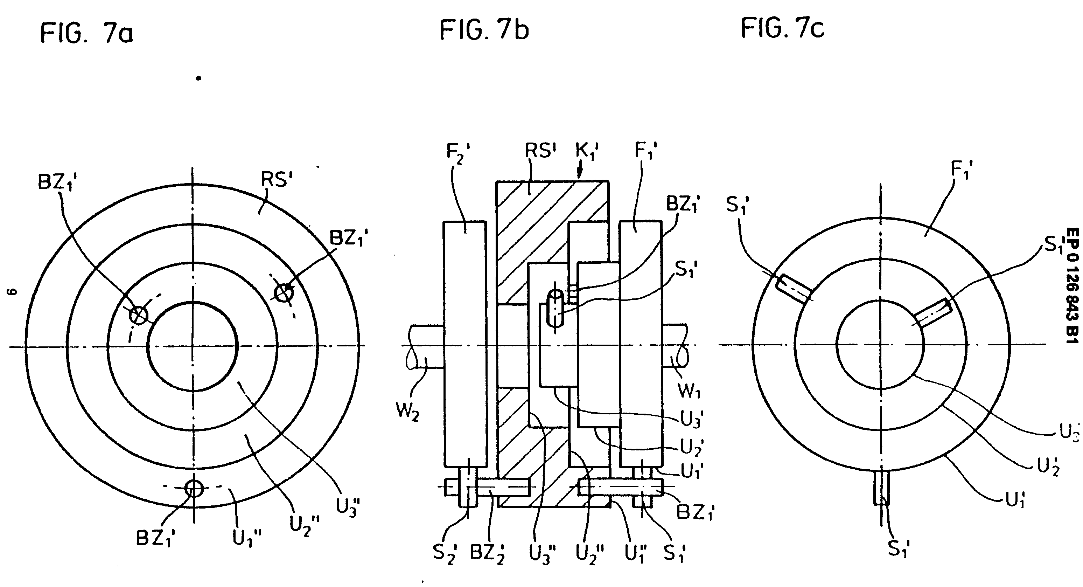

Um zum Reproduzieren einer verlorengegangenen Bezugsposition mit nur einer Referenzmarke auf der Teilscheibe T auskommen zu können, die dann keiner Codierung mehr bedarf, wird eine Mitnehmerkupplung $K_1'$ gemäß Figur 7 vorgeschlagen, die eine Relativdrehung der Welle $W_1$ bezüglich über der Welle $W_2$ über einen Winkel von 360° hinaus ermöglicht. Die Anschlußnabe $F_2'$ mit den drei um 120° zueinander versetzten Anschlägen $S_2'$ zum Anschluß der Welle $W_2$ ist mit der Anschlußnabe $F_2$ der Figur 6 identisch (Figur 7b). Die Anschlußnabe $F_1'$ zum Anschluß der Welle $W_1$ weist gemäß Figur 7b, 7c drei radial und axial abgesetzte konzentrische Stufen $U_1'$, $U_2'$, $U_3'$ auf, wobei aus jeder Stufe $U_1'$, $U_2'$, $U_3'$ ein Anschlag $S_1'$ in radialer Richtung herausragt; die drei Anschläge $S_1'$ auf den drei Stufen $U_1'$, $U_2'$, $U_3'$ sind um 120° zueinander versetzt. Bei der Ringscheibe RS' ragen aus der der Anschlußnabe $F_2'$ zugewandten Seite an der Peripherie drei um 120° zueinander versetzte Bolzen $BZ_2'$ in axialer Richtung heraus, die mit den Anschlägen $S_2'$ der Anschlußnabe $F_2'$ in Kontakt stehen (Figur 7b). Auf der der Anschlußnabe $F_1'$ zugewandten Seite weist die Ringscheibe RS' drei radial und axial abgesetzte konzentrische Stufen $U_1''$ $U_2''$, $U_3''$ auf, wobei aus jeder Stufe $U_1''$, $U_2''$, $U_3''$ ein Bolzen $BZ_1'$ in axialer Richtung herausragt; die drei Bolzen $BZ_1'$ auf den Stufen $U_1''$, $U_2''$, $U_3''$ sind um 120° zueinander versetzt und treten mit den jeweils zugehörigen Anschlägen $S_1'$ der Anschlußnabe $F_1'$ in Kontakt.

In nicht dargestellter Weise können auch die Anschläge $S_2'$ der Anschlußnabe $F_2'$ und die zugehörigen Bolzen $BZ_2'$ der Ringscheibe RS' auf radial und axial abgesetzten konzentrischen Stufen angeordnet sein. Die Kupplung $K_1$ kann auch als einfacher Mitnehmer ausgebildet sein.

Die Rutschkupplung $K_2$ kann als Wirbelstrombremse, als hydraulische Kupplung oder als magnetischer Mitnehmer ausgebildet sein. Die Teilscheibe T kann auch direkt mit der Antriebseinheit M verbunden sein.

## Patentansprüche

1. Vorrichtung zum Reproduzieren einer Bezugsposition bei relativ zueinander beweglichen Objekten (A, B, $O_1$, $O_2$), deren Relativlage mittels einer inkrementalen Wegmeßeinrichtung gemessen wird, bei der eine mit wenigstens einer Referenzmarke versehene Meßteilung (4, 34, T) an einem der zu messenden Objekte und eine Abtasteinrichtung (8, 38, AE) an dem anderen der vorgenannten Objekte befestigt ist, dadurch gekennzeichnet, daß nach unterbrochener Messung und Bewegung bei beliebiger, unbekannter, unveränderlicher Momentanposition der vorgenannten Objekte (A, B, $O_1$, $O_2$) zueinander die Meßteilung (4, 34, T) oder die Abtasteinrichtung (8, 38, AE) von dem zugehörigen Objekt (A, B, $O_2$) abgekoppelt und so weit verstellt wird, bis eine Referenzmarke (Ri) abgetastet wird, daß anschließend die gelöste Meßteilung (4, 34, T) oder Abtasteinrichtung (8, 38, AE) in die besagte Momentanposition zurückgestellt und dort wieder fixiert wird, und daß dabei der Verstellweg von der abgetasteten Referenzmarke (Ri) bis zur Momentanposition durch eine Auswerteeinrichtung (Z) registriert wird.

2. Vorrichtung nach Anspruch 1, gekennzeichnet durch folgende Merkmale:

a) die Abtasteinrichtung (8) ist von dem zugehörigen Objekt (A) abkoppelbar und aus ihrer Momentanposition mittels eines Antriebes (10, 11, 12) wenigstens bis zur Abtastung der nächsten Referenzmarke (Ri) und zurück verstellbar;

b) ein Träger (3) für die inkrementale Meßteilung (4) weist die wenigstens eine Referenzmarke (Ri) auf, deren Lage zum Teilungsnullpunkt absolut festgelegt ist;

c) die bei der Rückstellbewegung der Abtasteinrichtung (8) von der Referenzmarke (Ri) in die besagte Momentanposition gezählten Teilungsinkremente werden zusammen mit dem Positionswert der Referenzmarke (Ri) der Auswerteeinrichtung (Z) zugeführt und stellen den momentanen Meßwert, bezogen auf den Teilungsnullpunkt, dar.

3. Vorrichtung nach Anspruch 1, gekennzeichnet durch folgende Merkmale:

a) ein Träger (35) für eine Abtastplatte (38) ist von dem zugehörigen Objekt (A) abkoppelbar und aus der Momentanposition mittels eines Antriebes (310, 311, 352) wenigstens bis zur Abtastung der nächsten Referenzmarke (Ri) und zurück verstellbar;

b) ein Träger (33) für die inkrementale Meßteilung (34) weist noch eine Anzahl von Referenzmarken ($R_1$ bis $R_n$) auf, die mit Codemarken ($C_1$ bis $C_n$) versehen sind, deren Lage zum Teilungsnullpunkt absolut festgelegt und durch die Codemarken ($C_1$ bis $C_n$) gekennzeichnet ist;

c) eine Beleuchtungseinrichtung (36, 37) und Fotoelemente (39) sind ortsfest angeordnet, und eines der Fotoelemente (39) für die Referenzmarken (Ri bis Rn) erstreckt sich über eine Länge von wenigstens zwei benachbarten Referenzmarken (Ri und Ri + 1);

d) die bei der Rückstellbewegung der Abtastplatte (38) von einer der Referenzmarken (Ri) in die besagte Momentanposition gezählten Teilungsinkremente werden zusammen mit dem Positionswert der Referenzmarke (Ri) der Auswerteeinrichtung (Z) zugeführt und stellen den momentanen Meßwert, bezogen auf den Teilungsnullpunkt, dar.

4. Vorrichtung nach Anspruch 1, gekennzeichnet durch folgende Merkmale:

a) die Meßteilung (T) ist über eine in nur einer Bewegungsrichtung des zugehörigen Objekts ($O_2$) wirkende Mitnehmerkupplung ($K_1$) mit diesem Objekt ($O_2$) verbunden und von einer in umgekehrter Bewegungsrichtung wirkenden, aber in der Bewegungsrichtung umkehrbaren Antriebseinheit (M) beaufschlagt;

b) die Abtasteinheit (AE) ist starr mit dem zugehörigen Objekt ($O_1$) verbunden;

c) die inkrementale Meßteilung (T) weist die wenigstens eine Referenzmarke auf, deren Lage zum Teilungsnullpunkt absolut festgelegt ist;

d) die inkrementale Meßteilung (T) ist von dem zugehörigen Objekt ($O_2$) abkuppelbar und aus ihrer Momentanposition mittels der Antriebseinheit (M) wenigstens bis zur Abtastung der nächsten Referenzmarke und zurück verstellbar;

e) die bei der Rückstellung der inkrementalen Meßteilung (T) nach der Abtastung der Referenzmarke in die besagte Momentanposition gezählten Teilungsinkremente werden zusammen mit dem Positionswert der Referenzmarke der Auswerteeinrichtung zugeführt und stellen den momentanen Meßwert, bezogen auf den Teilungsnullpunkt, dar.

5. Vorrichtung nach Anspruch 3, dadurch gekennzeichnet, daß die codierten Referenzmarken ($R_1$ bis $R_n$) so auf dem Träger (33) verteilt sind, daß in jeder beliebigen Momentanposition wenigstens eine codierte Referenzmarke (Ri) im Bereich des Strahlenganges der Beleuchtungseinrichtung (36, 37) liegt.

6. Vorrichtung nach Anspruch 2, dadurch gekennzeichnet, daß die Bewegung der abgekoppelten Abtasteinrichtung (8) mit Hilfe eines Motors (10) und eines Zahnradgetriebes (11, 12) erfolgt.

7. Vorrichtung nach Anspruch 6, dadurch gekennzeichnet, daß ein Zahnrad (12) vom Umfang des Trägers (5) für die Abtasteinrichtung (8) gebildet ist.

8. Vorrichtung nach Anspruch 3, dadurch gekennzeichnet, daß die Schwenkung des abgekoppelten Trägers (35) für die Abtastplatte (38) mit Hilfe eines Motors (310) und eines Exzentergetriebes (311, 352) erfolgt.

9. Vorrichtung nach Anspruch 8, dadurch gekennzeichnet, daß die Vor- und Rückstellbewegung der Abtastplatte (38) durch eine Umdrehung des motorgetriebenen Exzenters (311) erfolgt, der zwischen den Armen einer Gabel (352) angreift.

10. Vorrichtung nach den Ansprüchen 2 und 3, dadurch gekennzeichnet, daß die besagte Momentanposition durch einen mechanischen Anschlag (53, 353) bestimmt wird.

11. Vorrichtung nach Anspruch 8 und 10, dadurch gekennzeichnet, daß ein Schaltarm (351) und ein Schalter (355) vorgesehen sind, durch die der Motor (310) im Moment der Anlage am Anschlag (3, 353) stillgesetzt wird.

12. Vorrichtung nach Anspruch 3, dadurch gekennzeichnet, daß die Meßeinrichtung ein Drehgeber ist, auf dessen Geberwelle (32) der Träger (33) für die Meßteilung (34) fest und der die Abtastplatte (38) tragende Träger (35) drehbar angeordnet sind.

13. Vorrichtung nach Anspruch 4, dadurch gekennzeichnet, daß die Mitnehmerkupplung ($K_1$) eine Anschlußnabe ($F_2$) für eine mit dem zugehörigen Objekt ($O_2$) verbundene Welle ($W_2$) und eine Anschlußnabe ($F_1$) für eine mit der Meßteilung (T) verbundene Welle ($W_1$) sowie eine Ringscheibe (RS) aufweist und daß die Anschlußnaben ($F_1$, $F_2$) an ihrer Peripherie jeweils drei um 120° zueinander versetzte, in radialer Richtung verlaufende Anschläge ($S_1$, $S_2$) besitzen, die mit drei um 120° zueinander versetzten, in axialer Richtung verlaufenden Bolzen (BZ) an der Peripherie der zwischen den Anschlußnaben ($F_1$, $F_2$) angeordneten Ringscheibe (RS) in Kontakt stehen.

14. Vorrichtung nach Anspruch 13, dadurch gekennzeichnet, daß die Anschläge ($S_1'$) der Anschlußnabe ($F_1'$) und/oder die Anschläge ($S_2'$) der Anschlußnabe ($F_2'$) jeweils auf radial und/oder axial versetzten konzentrischen Bahnen ($U_1'$, $U_2'$, $U_3'$) und die Bolzen ($BZ_1'$) und/oder die Bolzen ($BZ_2'$) der Ringscheibe (RS') jeweils auf radial und/oder axial versetzten konzentrischen Bahnen ($U_1''$, $U_2''$, $U_3''$) angeordnet sind.

15. Vorrichtung nach Anspruch 4, dadurch gekennzeichnet, daß die Meßteilung (T) über eine Rutschkupplung ($K_2$) mit der Antriebseinheit (M) verbunden ist.

## Claims

1. Apparatus for reproducing a reference position in respect of objects (A, B, $O_1$, $O_2$) which are movable relative to each other and the relative position of which is measured by means of an incremental travel measuring device, in which a measuring scale (4, 34, T) provided with at least one reference mark is secured to one of the objects to be measured and a scanning means (8, 38, AE) is secured to the other of said objects, characterised in that, after an interruption in measurement and movement, with said objects (A, B, $O_1$, $O_2$) in any, unknown, invariable instantaneous position relative to each other, the measuring scale (4, 34, T) or the scanning means (8, 38, AE) is uncoupled from the associated object (A, B, $O_2$) and displaced until a reference mark (Ri) is scanned, that then the released measuring scale (4, 34, T) or scanning means (8, 38, AE) is returned into said instantaneous position and fixed again therein, and that in that operation the length of the movement from the scanned reference mark (Ri) to the instantaneous position is registered by an evaluation means (Z).

2. Apparatus according to claim 1 characterised by the following features:

a) the scanning means (8) can be uncoupled from the associated object (A) and displaced from its instantaneous position by means of a drive (10, 11, 12) at least to the position for scanning of the next reference mark (Ri) and back again;

b) a carrier (3) for the incremental-measuring scale (4) has the at least one reference mark (Ri), the position of which relative to the zero point on the scale is fixed in absolute terms; and

c) the scale increments which are counted in the return movement of the scanning means (8) from the reference mark (Ri) into said instantaneous position are fed together with the positional value of the reference mark (Ri) to the evaluation means (Z) and represent the instantaneous measurement value with respect to the zero point on the scale.

3. Apparatus according to claim 1 characterised by the following features:

a) a carrier (35) for a scanning plate (38) can be uncoupled from the associated object (A) and displaced out of the instantaneous position by means of a drive (310, 311, 352) at least to the position for scanning of the next reference mark (Ri) and back again;

b) a carrier (33) for the incremental measuring scale (34) also has a number of reference marks ($R_1$ to $R_n$) provided with code marks ($C_1$ to $C_n$), the position of which relative to the zero point on the scale is fixed in absolute terms - and characterised by the code marks ($C_1$ to $C_n$);

c) a lighting means (36, 37) and photoelectric elements (39) are disposed at stationary locations and one of the photoelectric elements (39) for the reference marks ($R_1$ to $R_n$) extends over a length of at least two adjacent reference marks (Ri and Ri + 1); and

d) the scale increments which are counted in the return movement of the scanning plate (38) from one of the reference marks (Ri) into said instantaneous position are fed together with the positional value of the reference mark (Ri) to the evaluation means (Z) and represent the instantaneous measurement value with respect to the zero point on the scale.

4. Apparatus according to claim 1 characterised by the following features:

a) the measuring scale (T) is connected by way of an entrainment coupling means ($K_1$) which is operative in only one direction of movement of the associated object ($O_2$), to said object ($O_2$) and is acted upon by a drive unit (M) which is operative in the reverse direction of movement but which can be reversed in its direction of movement;

b) the scanning unit (AE) is rigidly connected to the associated object (O₁);

c) the incremental measuring scale (T) has the at least one reference mark, the position of which relative to the zero point on the scale is fixed in absolute terms;

d) the incremental measuring scale (T) can be uncoupled from the associated object (O₂) and moved from its instantaneous position by means of the drive unit (M) at least to the position for scanning of the next reference mark and back again; and

e) the scale increments which are counted in the return movement of the incremental measuring scale (T) after scanning of the reference mark into said instantaneous position are fed together with the positional value of the reference mark to the evaluation means and represent the instantaneous measurement value with respect to the zero point on the scale.

5. Apparatus according to claim 3 characterised in that the coded reference marks (R₁ to Rₙ) are so distributed on the carrier (33) that in any instantaneous position at least one coded reference mark (Ri) is disposed in the region of the path of the of the lighting means (36, 37).

6. Apparatus according to claim 2 characterised in that the movement of the uncoupled scanning means (8) is produced by means of a motor (10) and a gear transmission (11, 12).

7. Apparatus according to claim 6 characterised in that a gear (12) is formed by the periphery of the carrier (5) for the scanning means (8).

8. Apparatus according to claim 3 characterised in that the pivotal movement of the uncoupled carrier (35) for the scanning plate (38) is produced by means of a motor (310) and an eccentric transmission (311, 352).

9. Apparatus according to claim 8 characterised in that the forward and return movement of the scanning plate (38) is produced by a rotary motion of the motor-driven eccentric (311) which engages between the arms of a fork (352).

10. Apparatus according to claim 2 and 3 characterised in that said instantaneous position is determined by a mechanical abutment (53, 353).

11. Apparatus according to claim 8 and claim 10 characterised in that there are provided a switching arm (351) and a switch (355), by means of which the motor (310) is stopped at the moment of coming to bear against the abutment (53, 353).

12. Apparatus according to claim 3 characterised in that the measuring means is a rotary generator having a generator shaft (32) on which the carrier (33) for the measuring scale (34) is fixedly arranged and the carrier (35) carrying the scanning plate (38) is rotatably arranged.

13. Apparatus according to claim 4 characterised in that the entrainment coupling means (K₁) has a connecting hub (F₂) for a shaft (W₂) connected to the associated object (O₂) and a connecting hub (F₁) for a shaft (W₁) connected to

the measuring scale (T), and an annular disc (RS), and that the connecting hubs (F₁, F₂) are each provided at their periphery with three abutments (S₁, S₂) which are displaced at 120° relative to each other and which extend in a radial direction and which are in contact with three pins (BZ) at the periphery of the annular disc (RS) disposed between the connecting hubs (F₁, F₂), the pins (BZ) being displaced at 120° relative to each other and extending in the axial direction.

14. Apparatus according to claim 13 characterised in that the abutments (S₁') of the connecting hub (F₁') and/or the abutments (S₂') of the connecting hub (F₂') are respectively arranged on radially and/or axially displaced concentric paths (U₁', U₂', U₃') and the pins (BZ₁') and/or the pins (BZ₂') of the annular disc (RS') are respectively arranged on radially and/or axially displaced concentric paths (U₁'', U2'', U₃'').

15. Apparatus according to claim 4 characterised in that the measuring scale (T) is connected to the drive unit (M) by way of a slipping clutch (K₂).

**Revendications**

1. Dispositif de reproduction d'une position de référence avec des objets (A, B, O₁, O₂) pouvant effectuer un déplacement relatif l'un par rapport à l'autre et dont la position relative est mesurée à l'aide d'un dispositif incrémental de mesure de déplacement, dans lequel une graduation de mesure (4, 34, T) munie d'au moins une marque de référence est fixée sur l'un des objets à mesurer et un dispositif d'exploration (8, 38, AE) sur l'autre objet mentionné, caractérisé en ce qu'après une mesure et un déplacement interrompus et quelle que soit la position instantanée, invariable et inconnue desdits objets (A, B, O₁, O₂) l'un par rapport à l'autre, la graduation de mesure (4, 34, T) ou le dispositif d'exploration (8, 38, AE) est découplé de l'objet correspondant (A, B, O₂) et est déplacé jusqu'à ce qu'une marque de référence (Ri) soit balayée, en ce que la graduation de mesure (4, 34, T) ou le dispositif d'exploration (8, 38, AE) découplé est ensuite replacé dans la position instantanée mentionnée et y est de nouveau fixé, et en ce que le trajet de déplacement de la marque de référence balayée (Ri) jusqu'à la position instantanée est enregistré par un dispositif d'interprétation (Z).

2. Dispositif selon la revendication 1, caractérisé par le fait que:

a) le dispositif d'exploration (8) peut être découplé de l'objet correspondant (A) et être déplacé à l'aide d'un dispositif de commande (10, 11, 12) de sa position instantanée au moins jusqu'à balayer la marque de référence (Ri) la plus proche et retourner à sa position instantanée;

b) un support (3) pour la graduation de mesure incrémentale (4) présente la ou les marque(s) de référence (Ri) dont la position par rapport au point zéro de la graduation est déterminée de manière absolue;

c) les incréments de graduation comptés lors du retour du dispositif d'exploration (8) de la marque de référence (Ri) à ladite position instantanée sont fournis, ainsi que la valeur de position de la marque de référence (Ri), au dispositif d'interprétation (Z) et constituent la valeur mesurée instantanée par rapport au point zéro de la graduation.

3. Dispositif selon la revendication 1, caractérisé par le fait que:

a) un support (35) pour une plaque d'exploration (38) peut être découplé de l'objet correspondant (A) et être déplacé à l'aide d'un dispositif de commande (310, 311, 352) de la position instantanée au moins jusqu'à balayer la marque de référence (Ri) la plus proche et retourner à sa position instantanée;

b) un support (33) pour la graduation de mesure incrémentale (34) présente également un nombre de marques de référence ($R_1$ à $R_n$) qui sont munies de marques codées ($C_1$ à $C_n$) dont la position par rapport au point zéro de la graduation est déterminée de manière absolue et est caractérisée par les marques codées ($C_1$ à $C_n$);

c) un dispositif d'éclairage (36, 37) et des cellules photoélectriques (39) sont disposés de manière fixe et l'une des cellules photoélectriques (39) pour les marques de référence ($R_1$ à $R_n$) s'étend sur une longueur correspondant au moins à deux marques de référence voisines (Ri et Ri + 1);

d) les incréments de graduation comptés lors du retour de la plaque d'exploration (38) de l'une des marques de référence (Ri) à ladite position instantanée sont fournis, ainsi que la valeur de position de la marque de référence (Ri), au dispositif d'interprétation (Z) et constituent la valeur mesurée instantanée par rapport au point zéro de la graduation.

4. Dispositif selon la revendication 1, caractérisé par le fait que:

a) la graduation de mesure (T) est reliée par l'intermédiaire d'un accouplement d'entraînement ($K_1$) agissant uniquement dans un sens de déplacement de l'objet correspondant ($O_2$), à cet objet ($O_2$) et est commandée par une unité d'entraînement (M) agissant dans le sens de déplacement inverse, mais dont le sens de déplacement peut être renversé;

b) l'unité d'exploration (AE) est reliée de manière fixe à l'objet correspondant ($O_1$):

c) la graduation de mesure incrémentale (T) présente la ou les marque(s) de référence dont la position par rapport au point zéro de la graduation est déterminée de manière absolue;

d) la graduation de mesure incrémentale (T) peut être découplée de l'objet correspondant (O) et être déplacée à l'aide de l'unité d'entraînement (M) de sa position instantanée au moins jusqu'à balayer la marque de référence la plus proche et retourner à sa position instantanée;

e) les incréments de graduation comptés lors du retour de la graduation de mesure incrémentale (T) à ladite position instantanée après le balayage de la marque de référence, sont, ainsi que la valeur de position de la marque de référence, fournis au dispositif d'interprétation et constituent la valeur mesurée instantanée par rapport au point zéro de la graduation.

5. Dispositif selon la revendication 3, caractérisé en ce que les marques de référence codées ($R_1$ à $R_n$) sont réparties sur le support (33) de telle sorte que quelle que soit la position instantanée, au moins une marque de référence codée (Ri) se trouve dans la zone de la marche du rayon du dispositif d'éclairage (36, 37).

6. Dispositif selon la revendication 2, caractérisé en ce que le déplacement du dispositif d'exploration découplé (8) s'effectue à l'aide d'un moteur (10) et d'un engrenage (11, 12).

7. Dispositif selon la revendication 6, caractérisé en ce qu'une roue dentée (12) est formée par le pourtour du support (5) pour le dispositif d'exploration (8).

8. Dispositif selon la revendication 3, caractérisé en ce que le pivotement du support découplé (35) pour la plaque d'exploration (38) s'effectue à l'aide d'un moteur (310) et d'un mécanisme à excentrique (311, 352).

9. Dispositif selon la revendication 8, caractérisé en ce que le déplacement aller et retour de la plaque d'exploration (38) s'effectue par une rotation de l'excentrique (311) entraîné par moteur qui agit entre les branches d'une fourche (352).

10. Dispositif selon les revendications 2 et 3, caractérisé en ce que ladite position instantanée est déterminée par une butée mécanique (53, 353).

11. Dispositif selon les revendications 8 et 10, caractérisé en ce qu'il est prévu un bras de commutation (351) et un commutateur (355) par lesquels le moteur (310) est arrêté au moment de l'appui contre la butée (3, 353).

12. Dispositif selon la revendication 3, caractérisé en ce que le dispositif de mesure est un transmetteur angulaire sur l'arbre (32) duquel le support (33) pour la graduation de mesure (34) est disposé de manière fixe et le support (35) portant la plaque d'exploration (38) est disposé mobile en rotation.

13. Dispositif selon la revendication 4, caractérisé en ce que l'accouplement d'entraînement ($K_1$) présente un moyeu de raccordement ($F_2$) pour un arbre ($W_2$) relié à l'objet correspondant ($O_2$) et un moyeu de raccordement ($F_1$) pour un arbre ($W_1$) relié à la graduation de mesure (T) ainsi qu'un disque annulaire (RS) et en ce que les moyeux de raccordement ($F_1$, $F_2$) possèdent à leur périphérie chacun trois butées ($S_1$, $S_2$) qui sont décalées de 120° les unes par rapport aux autres, s'étendent en direction radiale et sont en contact avec trois goupilles (BZ) décalées de 120° les unes par rapport aux autres et s'étendant en direction axiale, à la périphérie du disque annulaire (RS) disposé entre les moyeux de raccordement ($F_1$, $F_2$).

14. Dispositif selon la revendication 13, caractérisé en ce que les butées ($S_1'$) du moyeu de raccordement ($F_1'$) et/ou les butées ($S_2'$) du moyeu de raccordement ($F_2'$) sont disposées sur des trajectoires concentriques ($U_1'$, $U_2'$, $U_3'$) décalées radialement et/ou axialement et les goupilles ($BZ_1'$) et/ou les goupilles ($BZ_2'$) du disque annulaire (RS') sont disposées sur des trajectoires concentriques ($U_1''$, $U_2''$, $U_3''$) décalées radialement et/ou axialement.

15. Dispositif selon la revendication 4, caractérisé en ce que la graduation de mesure (T) est reliée à l'unité d'entraînement (M) par l'intermédiaire d'un accouplement à glissement ($K_2$).

FIG. 1

EP 0 126 843 B1

FIG. 2

FIG. 3

FIG. 4                    A-B

3

FIG. 5

FIG.6

$F_2$  RS  $F_1$  BE  CD  AP  P  M

$\underline{AE}$

$\underline{K_2}$

$\underline{K_1}$

$O_2$  $W_2$

$L_2$ $S_2$ G  $S_1$  $W_1$  $L_1$  T  PL

BZ

$O_1$

EP 0 126 843 B1

FIG. 7a  FIG. 7b  FIG. 7c